# EUROPEAN PATENT SPECIFICATION

(11) **EP 4 237 881 B1**
(45) Date of publication and mention of the grant of the patent: **10.06.2026**
(21) Application number: 21806800.5
(22) Date of filing: 26.10.2021
(51) Int. Cl.: G01W 1/14, G01F 23/292, G01B 11/22

(54) **SNOW STAKE**
SCHNEESTÜTZE
ÉCHELLE À NEIGE

(30) Priority: 29.10.2020 GB 202017151
(43) Date of publication of application: 06.09.2023
(73) Proprietor: University College Cardiff Consultants Limited, Cardiff CF24 0DE (GB)
(72) Inventor: PRIOR-JONES, Michael, Cardiff CF24 0DE (GB)
(74) Representative: Abel & Imray LLP
(86) International application number: PCT/GB2021/052776
(87) International publication number: WO 2022/090701

(56) References cited:
- EP-A1- 2 813 870
- EP-A2- 2 834 684
- WO-A1-2019/026464
- GB-A- 2 539 216
- JP-A- 2020 094 991
- KR-A- 20030 087 593
- US-A1- 2009 229 784
- PAUL DIETZ ET AL: "Very Low-Cost Sensing and Communication Using Bidirectional LEDs", TECHNICAL REPORT MITSUBISHI ELECTRIC RESEARCH LABORATORIES,, no. 2003-35, 1 July 2003 (2003-07-01), pages 1 - 19, XP007913121

## Description

### Field of the Invention

The present invention concerns a snow stake for measuring snow depth. More particularly, but not exclusively, this invention concerns a method of manufacturing a snow stake for measuring snow depth.

### Background of the Invention

Snow stakes may be used to measure snow depth and snow pack composition. This may be useful for snow sport resorts where potential visitors want to know the quality of the snow conditions. Another potential use is for water management reasons, where a municipality is dependent on melt water from mountains for their water supply. If snow measurements indicate low levels of snow, then rationing measures can be put in place to ensure that water does not run out during typically high-demand periods such as spring and summer. Typically, existing technologies for snow depth measurement, particularly remote measurement, are expensive and as such used relatively sparsely. This can lead to a point measurement error. This could be where a snow stake is located in an exposed location meaning the snow pack may be blown away and the measurements taken represent an underestimation of the overall snow conditions. Alternatively, the snow stake may be located in a drift-prone location, such that the measurements taken represent an over-estimation of the overall snow conditions. Therefore, there is a need to provide an inexpensive snow stake, allowing multiple snow stakes to be located across an area, thereby reducing likelihood of point measurement error.

An example snow stake is found in GB 2539216, which discloses a snow depth gauge comprising an elongate support, a plurality of emitters disposed along the elongate support, and a corresponding plurality of sensors disposed along the elongate support. The emitters may be activated to emit light, which may be then reflected by snow proximate to the snow depth gauge, and measured by one or more of the plurality of sensors. The light detected by the plurality of sensors is analysed to provide an indication of the snow level proximate to the snow depth gauge. The plurality of sensors and plurality of detectors may also be disposed around the circumference of the snow depth gauge to eliminate potential drifting effects if snow depth is measured only in a single direction.

WO 2019/026464 discloses a snow depth gauge where pairs of sensors are disposed along the snow depth gauge. EP 2813870 A1 discloses a device for automatic measuring of the time course of snow height, air temperature and temperature profile of snow layer, comprising a sensor line which consists of optical sensors (photodiodes) laid out regularly and which is connected to a control unit, where there are temperature sensors regularly included in the sensor line and a system for the respective measurements and calculation of the snow water equivalent.

The present invention seeks to mitigate the above-mentioned problems. Alternatively or additionally, the present invention seeks to provide an improved snow stake.

### Summary of the Invention

The present invention provides, according to a first aspect, a snow stake according to claim 1.

The snow stake may be used to measure the depth and/or composition of snow surrounding the snow stake, by taking measurements of the surroundings using the strip of dual-purpose emitters/detectors. The dual-purpose emitters/detectors are arranged such that they are controlled to emit light, or detect light, by a control unit. Each dual-purpose emitter/detector comprises a single unit, for example a single LED, with an emitter mode and a detector mode. The same apparatus may be used to emit or detect light, without requiring the provision of a distinct emitter element, for example an LED, and a separate detector element, for example a photodetector. Instead, the same element is used both to emit light and detect light. The use of dual-purpose emitters/detectors may advantageously reduce the number of components required to manufacture the snow stake, and thereby potentially reduce the cost of the snow stake.

The control unit is arranged to switch the function of the dual-purpose emitters/detectors over the course of a measurement process. For example, a dual-purpose emitter/detector may be configured to emit light, with other of the dual-purpose emitters/detectors configured to detect light in a first measurement step. The same dual-purpose emitter/detector may be configured to detect light emitted by a different dual-purpose emitter/detector in a second step.

Each dual-purpose emitter/detector is an LED. As will be known by a skilled person, an LED can be used both to emit light, and separately detect light. The dual-purpose emitters/detectors may be arranged to emit and detect light in the UV, IR, or visible light spectrum.

The strip of dual-purpose emitters/detectors may comprise a flexible strip. Provision of a flexible strip may allow the manufacture of strip of dual-purpose emitters/detectors, for example a strip of LEDs, in a reel-to-reel process. Such a manufacturing process may be more efficient than producing rigid strips of dual-purpose emitters/detectors, and/or may reduce the footprint of equipment required in a manufacturing facility. This may reduce the costs of producing the strip of dual-purpose emitters/detectors. The strip may be mechanically fastened to the elongate body by adhesive, or another mechanical fixing means such as one or more clips or screws. Mechanically attaching the strip of dual-purpose emitters/detectors to the elongate body may result in a less expensive manufacturing process than producing an elongate body with integrated dual-purpose emitters/detectors. The elongate body may comprise a groove or receiving section, shaped to receive and securely hold the strip of dual-purpose emitters/detectors.

The strip of dual-purpose emitters/detectors may comprise control connectors, for example wiring, configured to connect the dual purpose emitters/detectors to a power source and/or a control unit.

The snow stake may comprise a modular arrangement, whereby a plurality of elongate bodies and associated strips of dual-purpose emitters/detectors are connected together. Such an arrangement may allow for easy adaptation of the snow stake for different conditions, for example where higher snowfall is expected in certain areas than in other areas. Also, provision of a modular system may reduce transport costs as the snow stake may be transported in a more compact arrangement. Each of the plurality of elongate bodies may comprise a connector at each distal end, thereby allowing easy connection to the next elongate body. Each of the plurality of strips of dual-purpose emitters/detectors may comprise an electrical connector at each distal end, thereby allowing easy connection to the next strip of dual-purpose emitters/detectors.

The snow stake may comprise a temperature sensor. The temperature sensor may be configured to detect the temperature of snow proximate to the location of the temperature sensor on the snow stake. This may provide further data which may be combined with the snow depth measurements to indicate snow conditions. The snow stake may comprise a plurality of temperature sensors disposed along the elongate body. Provision of a plurality of temperature sensors may allow the temperature at various locations through the snow pack to be measured and recorded, thereby giving a more complete picture of the snow conditions. The one or more temperature sensors may form part of the strip of dual-purpose emitters/detectors.

The snow stake may comprise an electrical conductivity sensor. The electrical conductivity sensor may measure the electrical conductivity of snow proximate to the location of the temperature sensor on the snow stake. Electrical conductivity measurements may indicate "wetness" of the snow. This may provide further data which may be combined with the snow depth measurements to indicate snow conditions. The snow stake may comprise a plurality of electrical conductivity sensors disposed along the elongate body. Provision of a plurality of electrical conductivity sensors may allow the electrical conductivity at various locations through the snow pack to be measured and recorded, thereby giving a more complete picture of the snow conditions. The one or more electrical conductivity sensors may form part of the strip of dual-purpose emitters/detectors.

The snow stake may further comprise a communications unit. The communications unit may be connected to the control unit. The communications unit may be configured to send information and commands both to and from the snow stake. For example, the communications unit may be configured to receive control signals from a remote location and transfer those control signals to the control unit. Alternatively or additionally, the communications unit may be configured to receive sensor measurements, for example from the dual-purpose emitters/detectors, the temperature sensor, or the electrical conductivity sensor, and send the measurements to a processing unit. The processing unit may comprise a portable smart device, such as a phone or a tablet, or a computer. The processing unit may process the measurements in order to provide an indication of the snow depth and/or snow conditions proximate to the snow stake. For example, the processing unit may be arranged to process the light detected by the dual-purpose emitters/detectors, which can provide an indication of whether or not the dual-purpose emitter/detector is under the snowline, and potentially further information regarding the composition of the adjacent snow if under the snowline. Different dual-purpose emitters/detectors may be arranged to emit different frequency light, which may provide further information regarding the composition of the snow which reflects that light.

The processing unit may be associated with a memory unit which is configured to store the measurements. The processing unit may form part of the snow stake, or alternatively be located remotely to the snow stake, for example a smart device or computer. Provision of a remote processing unit may reduce the cost of the snow stake, as a plurality of snow stakes may be configured to send measurements to a single processing unit. The processing unit may be arranged to process measurements taken by a plurality of separate snow stakes in order to provide an indication of snow conditions across an area, rather than only relying on point measurements.

The control unit, processing unit, memory unit, and communications unit may be combined and arranged in various different ways. For example, a snow stake may be provided with a memory unit only. In such an arrangement, the snow stake is a self-contained data logger. The memory unit may be removable, for example an SD card, or downloadable by a wired or wireless connection. Such an arrangement would allow for the data to be retrieved by visiting the snow stake. On retrieval of the stored data, the data may be processed by a remote processing unit.

The snow stake may comprise a memory unit and processing unit, thereby allowing the measurement data to be processed and stored in the memory unit. The measurement data and processed data may be retrieved as described above.

The snow stake may comprise a communications unit which transmits the measurement data to a remote memory unit and processing unit for remote storage and processing. The snow stake may comprise a communications unit and processing unit, such that processed measurement data is communicated to a remote memory unit.

The snow stake may be provided with a memory unit and a communications unit, whereby the memory unit stores measurement data collected over a period of time and only communicates the stored data at intervals. Such an arrangement may reduce the power consumed compared to continuous transmission of measurement data. A processing unit may be added to the snow stake, and the processed measurement data transmitted at intervals.

The snow stake may be provided with a user interface, which may be arranged to display measurement data to a user of the snow stake. The user interface, the control unit, the processing unit, and the memory unit, may form part of a head unit. Such an arrangement will allow the snow stake to be used and measurement data read by a user without needing any additional equipment. For example, the snow stake may comprise an avalanche probe or ski pole, and a user may use the snow stake to take measurements of snow depth and composition in various locations as they travel. Those measurements may be displayed via the user interface, and may also trigger visible and/or audible alarms to be emitted by the user interface if conditions which indicate a high risk of avalanche are detected. Different visible and/or audible alarms may be emitted depending on the conditions detected, for example with different alarms associated with low, medium, and high risk conditions. The user interface may compare the measurements taken by the snow stake to measurement data stored in the memory unit, where the measurement data stored in the memory unit relates to conditions which indicate the risk levels of an avalanche occurring, for example low, medium, and high risk conditions.

The strip of dual-purpose emitters/detectors may be coated with a snow repellent material to reduce the likelihood of snow blown by the wind adhering to the strip, such a material may be a low friction material, such as PTFE, or a hydrophobic material. If blown snow adhered to the strip, it could reduce the accuracy of the measurements taken, for example indicating a higher snow level than in reality.

According to a second aspect of the invention there is also provided a method of manufacturing a snow stake according to claim 14.

The step of mechanically attaching the flexible strip to the elongate body may comprise applying adhesive to the flexible strip and/or elongate body. The step of mechanically attaching the flexible strip to the elongate body may comprise attaching the flexible strip to the elongate body with screws or clips.

The method may further comprise the step of attaching a plurality of electrical connectors to the flexible strip, the electrical connectors arranged to provide power to the dual-function emitters/detectors and/or transmit control or measurement signals to or from the dual-function emitters/detectors.

The method may further comprise the step of attaching one or more temperature sensors, and/or electrical conductivity sensors, to the flexible strip.

The attachment of the plurality of dual-function emitters/detectors, one or more temperature sensors, and/or electrical conductivity sensors to the flexible strip may comprise utilising a reel-to-reel manufacturing process. Such an arrangement may reduce the equipment footprint required in the manufacturing facility.

It will of course be appreciated that features described in relation to one aspect of the present invention may be incorporated into the other aspect of the present invention. For example, the method of the invention may incorporate any of the features described with reference to the apparatus of the invention and *vice versa.*

### Description of the Drawings

Embodiments of the present invention will now be described by way of example only with reference to the accompanying schematic drawings of which:
- Figure 1: shows a schematic view of a snow stake according to a first embodiment of the invention;
- Figure 2: shows schematic view of a modular snow stake according to a second embodiment of the invention;
- Figure 3: shows a reel to reel manufacturing method of producing an elongate strip as used in the first and second embodiment of the invention; and
- Figure 4: shows an example sensor arrangement according to an embodiment of the invention.

### Detailed Description

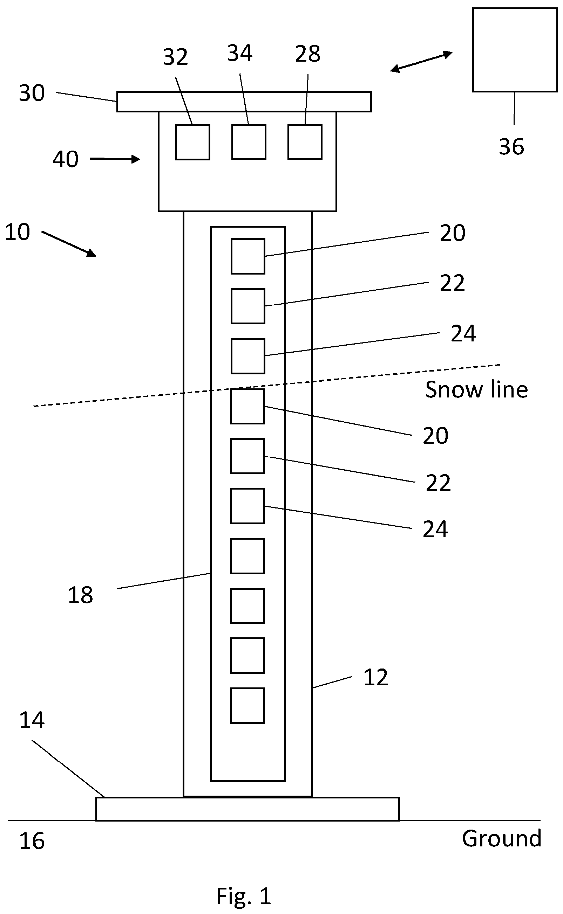

Figure 1 shows a snow stake 10 which comprises an elongate body 12 connected to a base 14, the base 14 being secured to the ground 16 such that the elongate body 12 extends from the ground 16 in an approximately vertical direction. The elongate body is formed of a material suitable for use in a cold environment, and may be an insulator, for example a body made of glass-reinforced nylon. A flexible strip 18 is mechanically connected to the elongate body 12 by an adhesive. The flexible strip 18 comprises a plurality of dual-function emitters/detectors in the form of LEDs 20, each dual-function emitter/detector comprising an LED 20, a plurality of temperature sensors 22, and a plurality of electrical conductivity sensors 24. The LEDs 20, temperature sensors 22, and electrical conductivity sensors 24 are disposed along the flexible strip 18 in a regular repeating pattern, such that they extend from the top to the bottom of the elongate body 12. The skilled person will appreciate that figure 1 is schematic only, and the number of LEDs and sensors may be much greater than shown. The flexible strip 18 also includes wiring (not shown for clarity) which allows power to be supplied to, and measurement data taken from, the LEDs 20, temperature sensors 22, and electrical conductivity sensors 24. A head unit 40, including a power supply in the form of a battery 28 and solar panel 30 is arranged to supply power to the snow stake 10, is located at the top of the snow stake 10 in order to provide the optimum position for the solar panel 30. The head unit 40 is also provided with a communications unit 32 linked to a control unit 34. The control unit 34 is arranged to take various measurements with the LEDs 20, temperature sensors 22, and electrical conductivity sensors 24, and send that measurement data via the communications unit 32 to a central processing unit 36. The central processing unit 36 is arranged to analyse the measurement data in order to provide an indication of the snow depth and snow pack composition proximate to the snow stake 10. The central processing unit 36 may be a portable smart device such as a phone or tablet, or a computer located away from the snow stake.

A typical measurement cycle will take place as follows. During daylight hours, the LEDs 20 may be used to take a simple and passive light detection measurement. The LEDs that are above the snowline will detect more light than the LEDs below the snowline. When there is no daylight, which may be for particularly long periods of time in the winter season, one or more of the LEDs 20 may be activated to emit light which is then detected by the LEDs 20 which are not emitting light. The level of reflectance detected by each LED 20 will indicate the snow levels proximate to that LED 20, and will give an indication of the snow level. The LEDs 20 may be arranged to emit light of different wavelengths. By varying the wavelength of the light being emitted, the measurements may give further indications of the composition of the snowpack, not just the depth of the snowpack. The measurements being taken by the LEDs 20 will be complimented and combined with the measurements taken by the temperature sensors 22 and electrical conductivity sensors 24. Those additional measurements will give a further indication of the composition of the snowpack, for example the "wetness" of the snow, and whether or not the snowpack is melting, or close to melting. Such information may be particularly useful for water management purposes where snow melt provides a significant proportion of a water supply. The measurements taken by the LEDs 20, the temperature sensors 22, and the electrical conductivity sensors are collected by the control unit 34 and transmitted by the communications unit 32 to the central processing unit 36. The use of a central processing unit 36 reduces the complexity of the individual snow stake 10, and a single central processing unit 36 may be arranged to receive measurement data from a large number of individual snow stakes. The snow stake 10 may be arranged to run through a measurement cycle on a regular basis, for example four times a day. Alternatively, or in addition to the regular measurement cycle, the central processing unit 36 may send a measurement request to the snow stake 10 via the communications unit 32 which initiates a measurement cycle.

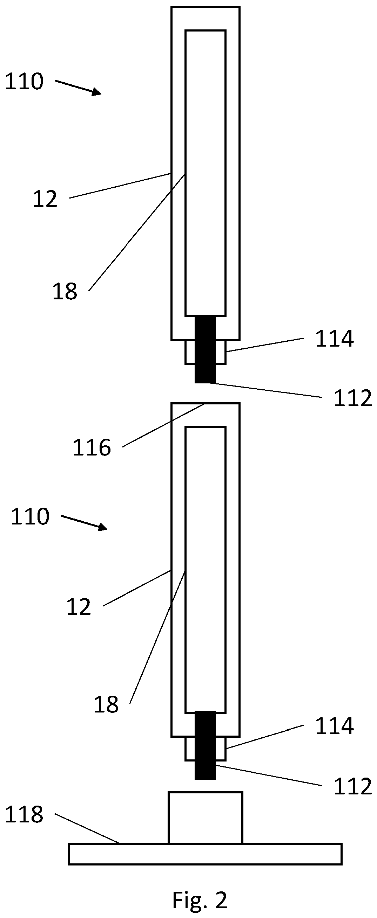

Figure 2 shows a schematic representation of a second embodiment of the invention. A modular arrangement is provided, made up of a plurality of elements 110. Each modular element 110 is similar to the elongate body 12 and flexible strip of sensors 18 described with reference to figure 1, and where appropriate the same reference numerals have been used. For purposes of clarity, the LED and sensor arrangement as shown in figure 1 has not been reproduced, but would be understood by the skilled person to be present on the flexible strip 18. The main difference between the embodiment shown in figure 1 and the embodiment shown in figure 2 is the provision of a copper connection 112 extending from the end of the flexible strip of sensors 18, which allows connection of the flexible strip of sensors 18 to a flexible strip of sensors on an adjoining modular element 110, such that the two flexible strips 18 then act as a single flexible strip. The elongate body 12 also comprises a protrusion 114 which is shaped to securely engage with a correspondingly shaped receiving portion 116 in the elongate body of an adjoining module element 110. The protrusion 114 and receiving portion may be provided with a demountable coupling, for example being threaded, or having a bayonet type fitting, such that the module elements 110 are easily joined together when required. In an alternative embodiment, the modular elements 110 may be associated with a bungee cord, which allows the easy assembly and disassembly of the snow stake, whilst also ensuring that all the modular elements 110 remain together when disassembled. The skilled person will appreciate that the modular elements may be joined together by a variety of suitable couplings that allow the snow stake to be folded or dismantled for easy transportation when not in use. Such couplings may include springs, lockable hinges, and/or locking collars. The couplings may be such that the modular elements remain together when disassembled, which ensures no parts are lost during transportation. A base 118 is also provided to receive the lowest modular element 110, and allow the snow stake 10 created by the modular elements 110 to be secured in position in a similar way as to the first embodiment. A head unit 40 may be joined to the top modular element 110 in a similar way to the head unit 40 is connected to the snow stake 10. Measurements may be taken with the modular arrangement of figure 2 in the same way as the embodiment described with reference to figure 1.

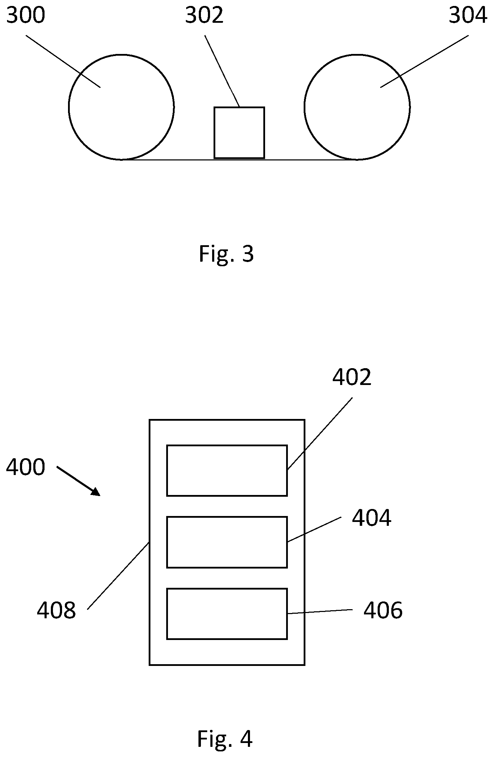

Figure 3 shows a manufacturing apparatus for manufacturing the flexible strip of LEDs, temperature sensors, and electrical conductivity sensors. The flexible strip, in the form of a flexible PCB is supplied on a reel 300. The strip is run through a sensor application station 302, where the LEDs, temperature sensors, and electrical conductivity sensors are applied to the strip, which is then spooled onto the reel 304. In addition to reducing the manufacturing footprint of the apparatus, the reel of flexible strip may be more easily transported to further manufacturing stations, for example where the strip is applied to the elongate body. The reel of flexible strip may also be manufactured such that easily divided sections of flexible strip are provided, thereby allowing easy cutting of the flexible strip to the required lengths.

Figure 4 shows combined sensor arrangement 400, where an LED 402, a temperature sensor 404, and electrical conductivity sensor 406, are applied to a common backing substrate 408. Provision of a combined sensor arrangement 400 may speed up the manufacturing process for the flexible strip. Alternatively, there may be a plurality of LEDs, for example emitting and detecting different wavelengths, combined on a common backing substrate with a single temperature sensor and single electrical conductivity sensor. The flexible strip may comprise a flexible PCB on which the various elements are installed. The flexible strip may be coated in a waterproof material, and/or a low-friction material.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

In the embodiments described with reference to figures 1 and 2, snow stakes that are installed in a fixed location are described. However, portable snow stakes, may also be provided. A portable snow stake, for example in the form of a snow probe similar to those used to measure snow conditions or search for avalanche victims, could provide useful information about snow levels and snow pack composition to those in the field. Alternatively, the portable snow stake may comprise a ski-pole, which would reduce the amount of equipment a user had to carry. For example, someone skiing or otherwise travelling in remote backcountry conditions could check the immediate snow conditions with more accuracy than a simple probe. The snow stake may comprise a user interface, the user interface arranged to display the measurements taken by the snow stake. This may be advantageous when the snow stake is a portable snow stake, and being used to check whether there is a risk of avalanche. The user interface may be arranged to emit a visible and/or audible alarm if avalanche conditions are detected to ensure that the user is aware of the risk. A visible and/or audible alarm may be advantageous where weather conditions make reading a display screen difficult, for example in blizzard conditions. The flexible strip may be attached to the entire length of the snow probe, or only a proportion of the snow probe, for example the tip. In a yet further embodiment, a flexible strip comprising LEDs, temperature sensors, and electrical conductivity sensors, may be used without requiring additional reinforcement. For example, the flexible strip may be lowered into crevasses to detect snow conditions deep in the crevasse, and potentially deeper than a rigid probe would be able to be inserted. In such an arrangement, the flexible strip may be supplied in a reel.

Different types of base may be provided as would be understood by the skilled person. For example, a snow stake according to the invention may comprise a spiked base, which may be useful if installing the snow stake on a glacier, where no "ground" exists to secure the stake to. A spiked base may also be useful when installing the snow stake in a position already covered with snow, for example in an area which always has some level of snow cover and access to bare ground is difficult. The snow stake may be provided with a set of interchangeable bases allowing for easy adaptation of the snow stake depending on the intended use and environmental conditions in the position of installation.

The snow stake may be positioned to monitor ice ablation, for example the snow stake may be positioned on a glacier to monitor glacier ablation, on an ice sheet, ice shelf, or other large body of ice. In the references above to "snow", the skilled person will appreciate that the arrangement may equally apply to ice. When positioned on a body of ice, the skilled person will appreciate that the installation process may involve drilling into ice in order to position the snow stake.

## Claims

1. A snow stake comprising:
an elongate body (12);
a strip (18) of dual-purpose emitters/detectors (20) mechanically attached to the elongate body (12), such that the dual-purpose emitters/detectors (20) are disposed along the elongate body (12),
wherein each dual-purpose emitter/detector (20) is configured to be able to both emit light and detect light
and a control unit (34), wherein the dual-purpose emitters/detectors (20) are arranged such that they are controlled to emit light, or detect light, by the control unit (34),
wherein the control unit (34) is arranged to switch the function of the dual-purpose emitters/detectors (20) over the course of a measurement process, and
each of the dual-purpose emitters/detectors (20) is an LED.

2. A snow stake as claimed in claim 1, wherein the strip of dual-purpose emitters/detectors comprises a flexible strip.

3. A snow stake as claimed in any preceding claim, wherein the strip is mechanically fastened to the elongate body by adhesive.

4. A snow stake as claimed in any preceding claim, comprising a modular arrangement, whereby a plurality of elongate bodies and associated strips of dual-purpose emitters/detectors are connected together.

5. A snow stake as claimed in any preceding claim, further comprising one or more temperature sensors disposed along the elongate body.

6. A snow stake as claimed in claim 5, wherein the one or more temperature sensors form part of the strip of dual-purpose emitters/detectors.

7. A snow stake as claimed in any preceding claim, further comprising one or more electrical conductivity sensors disposed along the elongate body.

8. A snow stake as claimed in claim 7, wherein the one or more electrical conductivity sensors form part of the strip of dual-purpose emitters/detectors.

9. A snow stake as claimed in any preceding claim, further comprising a communications unit, wherein the communications unit is configured to send information and commands both to and from the snow stake.

10. A snow stake as claimed in claim 9, wherein the communications unit is configured to receive sensor measurements and send the measurements to a processing unit.

11. A snow stake as claimed in any preceding claim, further comprising a processing unit, wherein the processing unit is arranged to process measurements taken by the snow stake in order to provide an indication of the snow depth and/or snow conditions proximate to the snow stake.

12. A snow stake as claimed in any preceding claim, comprising a user interface, the user interface arranged to display measurement data obtained via the snow stake.

13. A snow stake as claimed in any preceding claim, wherein the strip of dual-purpose emitters/detectors is coated with a snow repellent material.

14. A method of manufacturing a snow stake, the method comprising the steps of:
providing a flexible strip (18);
attaching a plurality of dual-function emitters/detectors (20) to the flexible strip, wherein each dual-function emitter/detector is an LED;
providing an elongate body (12);
mechanically attaching the flexible strip to the elongate body; and
attaching a control unit (34) to the dual-function emitters/detectors and configuring the control unit to control the dual-function emitters/detectors to emit light, or detect light, and switch the function of the dual-purpose emitters/detectors over the course of a measurement process.

15. A method as claimed in claim 14, wherein the step of mechanically attaching the flexible strip to the elongate body comprises applying adhesive to the flexible strip and/or elongate body.

## Patentansprüche

1. Schneemessstab, umfassend:
einen länglichen Körper (12);
einen Streifen (18) aus Doppelfunktions-Emittern/Detektoren (20), der mechanisch an dem länglichen Körper (12) befestigt ist, sodass die Doppelfunktions-Emitter/Detektoren (20) entlang des länglichen Körpers (12) angeordnet sind,
wobei jeder Doppelfunktions-Emitter/Detektor (20) so konfiguriert ist, dass er sowohl Licht emittieren als auch Licht detektieren kann;
sowie eine Steuereinheit (34), wobei die Doppelfunktions-Emitter/Detektoren (20) so angeordnet sind, dass sie von der Steuereinheit (34) gesteuert werden, um Licht zu emittieren oder Licht zu detektieren,
wobei die Steuereinheit (34) so ausgelegt ist, dass sie die Funktion der Doppelfunktions-Emitter/Detektoren (20) im Verlauf eines Messvorgangs umschaltet, und
jeder der Doppelfunktions-Emitter/Detektoren (20) eine LED ist.

2. Schneemessstab nach Anspruch 1, wobei der Streifen aus Doppelfunktions-Emittern/Detektoren einen flexiblen Streifen umfasst.

3. Schneemessstab nach einem der vorstehenden Ansprüche, wobei der Streifen durch Klebstoff mechanisch an dem länglichen Körper befestigt ist.

4. Schneemessstab nach einem der vorstehenden Ansprüche, der eine modulare Anordnung umfasst, wobei eine Vielzahl von länglichen Körpern und zugehörigen Streifen aus Doppelfunktions-Emittern/Detektoren miteinander verbunden sind.

5. Schneemessstab nach einem der vorstehenden Ansprüche, der ferner einen oder mehrere Temperatursensoren umfasst, die entlang des länglichen Körpers angeordnet sind.

6. Schneemessstab nach Anspruch 5, wobei der eine oder die mehreren Temperatursensoren Teil des Streifens aus Doppelfunktions-Emittern/Detektoren bilden.

7. Schneemessstab nach einem der vorstehenden Ansprüche, der ferner einen oder mehrere Sensoren für elektrische Leitfähigkeit umfasst, die entlang des länglichen Körpers angeordnet sind.

8. Schneemessstab nach Anspruch 7, wobei der eine oder die mehreren Sensoren für elektrische Leitfähigkeit Teil des Streifens aus Doppelfunktions-Emittern/Detektoren bilden.

9. Schneemessstab nach einem der vorstehenden Ansprüche, der ferner eine Kommunikationseinheit umfasst, wobei die Kommunikationseinheit so konfiguriert ist, dass sie Informationen und Befehle sowohl an den Schneemessstab als auch von diesem sendet.

10. Schneemessstab nach Anspruch 9, wobei die Kommunikationseinheit so konfiguriert ist, dass sie Sensormesswerte empfängt und die Messwerte an eine Verarbeitungseinheit sendet.

11. Schneemessstab nach einem der vorstehenden Ansprüche, der ferner eine Verarbeitungseinheit umfasst, wobei die Verarbeitungseinheit dazu ausgelegt ist, vom Schneemessstab erfasste Messwerte zu verarbeiten, um eine Angabe der Schneehöhe und/oder der Schneeverhältnisse in der Nähe des Schneemessstabs bereitzustellen.

12. Schneemessstab nach einem der vorstehenden Ansprüche, der eine Benutzerschnittstelle umfasst, wobei die Benutzerschnittstelle so ausgelegt ist, dass sie über den Schneemessstab erhaltene Messdaten anzeigt.

13. Schneemessstab nach einem der vorstehenden Ansprüche, wobei der Streifen aus Doppelfunktions-Emittern/Detektoren mit einem schneeabweisenden Material beschichtet ist.

14. Verfahren zur Herstellung eines Schneemessstabs, wobei das Verfahren die folgenden Schritte umfasst:
Bereitstellen eines flexiblen Streifens (18);
Anbringen einer Vielzahl von Doppelfunktions-Emittern/Detektoren (20) an dem flexiblen Streifen, wobei jeder Doppelfunktions-Emitter/Detektor eine LED ist;
Bereitstellen eines länglichen Körpers (12);
mechanisches Befestigen des flexiblen Streifens an dem länglichen Körper; und
Anbringen einer Steuereinheit (34) an den Doppelfunktions-Emittern/Detektoren und Konfigurieren der Steuereinheit, um die Doppelfunktions-Emitter/Detektoren so zu steuern, dass sie Licht emittieren oder Licht detektieren, und um die Funktion der Doppelfunktions-Emitter/Detektoren im Verlauf eines Messvorgangs umzuschalten.

15. Verfahren nach Anspruch 14, wobei der Schritt des mechanischen Befestigens des flexiblen Streifens an dem länglichen Körper das Aufbringen von Klebstoff auf den flexiblen Streifen und/oder den länglichen Körper umfasst.

## Revendications

1. Échelle à neige comprenant :
un corps allongé (12) ;
une bande (18) d'émetteurs/détecteurs (20) à double fonction fixés mécaniquement au corps allongé (12), de sorte que les émetteurs/détecteurs (20) à double fonction sont disposés le long du corps allongé (12),
dans laquelle chaque émetteur/détecteur (20) à double fonction est configuré pour pouvoir à la fois émettre de la lumière et détecter de la lumière
et une unité de commande (34), les émetteurs/détecteurs (20) à double fonction étant agencés de sorte qu'ils sont commandés pour émettre de la lumière, ou détecter de la lumière, par l'unité de commande (34),
dans laquelle l'unité de commande (34) est agencée pour commuter la fonction des émetteurs/détecteurs (20) à double fonction au cours d'un procédé de mesure, et
chacun des émetteurs/détecteurs (20) à double fonction est une DEL.

2. Échelle à neige selon la revendication 1, dans laquelle la bande d'émetteurs/détecteurs à double fonction comprend une bande flexible.

3. Échelle à neige selon une quelconque revendication précédente, dans laquelle la bande est assujettie mécaniquement au corps allongé par un adhésif.

4. Échelle à neige selon une quelconque revendication précédente, comprenant un agencement modulaire, grâce à quoi une pluralité de corps allongés et de bandes associées d'émetteurs/détecteurs à double fonction sont reliés entre eux.

5. Échelle à neige selon une quelconque revendication précédente, comprenant en outre un ou plusieurs capteurs de température disposés le long du corps allongé.

6. Échelle à neige selon la revendication 5, dans laquelle les un ou plusieurs capteurs de température font partie de la bande d'émetteurs/détecteurs à double fonction.

7. Échelle à neige selon une quelconque revendication précédente, comprenant en outre un ou plusieurs capteurs de conductivité électrique disposés le long du corps allongé.

8. Échelle à neige selon la revendication 7, dans laquelle les un ou plusieurs capteurs de conductivité électrique font partie de la bande d'émetteurs/détecteurs à double fonction.

9. Échelle à neige selon une quelconque revendication précédente, comprenant en outre une unité de communication, dans laquelle l'unité de communication est configurée pour envoyer des informations et des commandes à la fois à destination et en provenance de l'échelle à neige.

10. Échelle à neige selon la revendication 9, dans laquelle l'unité de communication est configurée pour recevoir des mesures de capteurs et envoyer les mesures à une unité de traitement.

11. Échelle à neige selon une quelconque revendication précédente, comprenant en outre une unité de traitement, dans laquelle l'unité de traitement est agencée pour traiter les mesures prises par l'échelle à neige afin de fournir une indication de la profondeur de neige et/ou des conditions d'enneigement à proximité de l'échelle à neige.

12. Échelle à neige selon une quelconque revendication précédente, comprenant une interface utilisateur, l'interface utilisateur étant agencée pour afficher les données de mesure obtenues par l'intermédiaire de l'échelle à neige.

13. Échelle à neige selon une quelconque revendication précédente, dans laquelle un matériau repoussant la neige est appliqué par revêtement sue la bande d'émetteurs/détecteurs à double fonction.

14. Procédé de fabrication d'une échelle à neige, le procédé comprenant les étapes de :
fourniture d'une bande flexible (18) ;
fixation d'une pluralité d'émetteurs/détecteurs (20) à double fonction sur la bande flexible, chaque émetteur/détecteur à double fonction étant une DEL ;
fourniture d'un corps allongé (12) ;
fixation mécanique de la bande flexible au corps allongé ; et
fixation d'une unité de commande (34) aux émetteurs/détecteurs à double fonction et configuration de l'unité de commande pour commander les émetteurs/détecteurs à double fonction afin qu'ils émettent de la lumière, ou détectent de la lumière, et pour commuter la fonction des émetteurs/détecteurs à double fonction au cours d'un procédé de mesure.

15. Procédé selon la revendication 14, dans lequel l'étape de fixation mécanique de la bande flexible au corps allongé comprend l'application d'un adhésif sur la bande flexible et/ou le corps allongé.
